Europäisches Patentamt

European Patent Office

Office européen des brevets

(19)

(11) Veröffentlichungsnummer: **0 497 939 B1**

(12) **EUROPÄISCHE PATENTSCHRIFT**

(45) Veröffentlichungstag der Patentschrift: **04.01.95**

(51) Int. Cl.[6]: **B60T 8/00**

(21) Anmeldenummer: **91914127.5**

(22) Anmeldetag: **08.08.91**

(86) Internationale Anmeldenummer:
**PCT/EP91/01499**

(87) Internationale Veröffentlichungsnummer:
**WO 92/03314 (05.03.92 92/06)**

(54) **VERFAHREN ZUR REGELUNG DER FAHRZEUGDYNAMIK.**

(30) Priorität: **23.08.90 DE 4026626**

(43) Veröffentlichungstag der Anmeldung:
**12.08.92 Patentblatt 92/33**

(45) Bekanntmachung des Hinweises auf die
Patenterteilung:
**04.01.95 Patentblatt 95/01**

(84) Benannte Vertragsstaaten:
**DE FR GB SE**

(56) Entgegenhaltungen:
**WO-A-89/02842**
**DE-A- 3 611 822**
**DE-A- 3 919 347**

(73) Patentinhaber: **ROBERT BOSCH GMBH**
**Postfach 30 02 20**
**D-70442 Stuttgart (DE)**

(72) Erfinder: **HARTMANN, Uwe**
**Olgastrasse 79**
**D-7000 Stuttgart 1 (DE)**
Erfinder: **EHRET, Thomas**
**Stuttgarterstrasse 37**
**D-7141 Schwieberdingen (DE)**
Erfinder: **VAN ZANTEN, Anton**
**Waldstrasse 52**
**D-7257 Ditzingen 4 (DE)**
Erfinder: **KOST, Friedrich**
**Johannes-Brahms-Strasse 1**
**D-7014 Kornwestheim (DE)**

(74) Vertreter: **Kammer, Arno, Dipl.-Ing.**
**ROBERT BOSCH GmbH**
**Zentralabteilung Patente**
**Postfach 30 02 20**
**D-70442 Stuttgart (DE)**

EP 0 497 939 B1

**Beschreibung**

Problembeschreibung

Die Fahrzeugdynamik wird bekanntlich von den Kräften, die von der Fahrbahn auf die Reifen des Fahrzeugs ausgeübt werden, beeinflußt. Es ist bekannt, daß beim bremsenden Fahrzeug die Schräglaufsteifigkeit der Reifen von den Bremsschlüpfen der Reifen abhängen. Im allgemeinen nimmt die Schräglaufsteifigkeit der Reifen bei zunehmendem Bremsschlupf ab.

Für die Fahrzeugführung sind Seitenführungskräfte an den Reifen notwendig. Für die Fahrzeug-Gierdynamik sind Giermomente am Fahrzeug notwendig. Diese Giermomente können sowohl von den Bremskräften als auch von den Seitenführungskräften hervorgerufen werden. Für die Fahrzeug-Gierbewegung sind die Bremskräfte also aus zwei Gründen wichtig. Erstens, weil die Bremskräfte ein Giermoment auf das Fahrzeug ausüben können, und zweitens, weil die Bremskräfte das Giermoment der Seitenführungskräfte (indirekt über den Bremsschlupf) durch Änderung der Schräglaufsteifigkeit beeinflussen können.

Aus der DE 36 11 822 A1 ist ein Antiblockierregelsystem mit Schlupfregelung bekannt, bei dem zusätzlich die Querkraft ermittelt wird. Übersteigt diese einen Grenzwert, so werden die Schwellen für die Schlupfmessung erniedrigt, um Seitenführungskraft zu gewinnen.

Vorteile der Erfindung

Die Fahrdynamik wird somit mittels Bremseneingriff beeinflußt. Es wird während einer Bremsung die Fahrdynamik optimal gestaltet, jedoch auch der Bremsweg minimiert.

Es muß hierzu nach einem Kompromiß gesucht werden, bei dem die Brems-Schlupfwerte an den Reifen so eingestellt werden, daß einerseits die Gierdynamik verbessert wird, ohne daß andererseits zuviel Bremsverzögerung verschenkt wird. Zu diesem Zweck wird an jedem Reifen bestimmt, wie einerseits das Giermoment auf das Fahrzeug und wie andererseits die Bremsverzögerung des Fahrzeugs sich ändert, wenn eine kleine Änderung des Bremsschlupf erfolgt. Das Verhältnis Giermomentänderung zu Bremsverzögerungsänderung wird für jedes Rad berechnet. Für die Giermomentenregelung wird das Rad mit dem größten Verhältnis am meisten und das Rad mit dem kleinsten Verhältnis am wenigsten herangezogen. Hiermit ist die Kernfrage, wie die Verteilung der Bremskräfte oder die Verteilung der Bremsschlüpfe gestaltet werden soll, geklärt.

Die Änderung der Brems- und Seitenführungskräfte aufgrund von Änderungen der Bremsschlüpfe können entweder direkt gemessen oder mittels geeigneten Schätzalgorithmen abgeschätzt werden.

Zur Bestimmung der notwendigen Bremsschlupfänderungen an den Rädern benötigt man eine Regelabweichung. Hierfür wurde eine Modellfolge-Regelung gewählt. Da aber die Position des Fahrzeugs vorerst nicht gemessen werden kann, wird nur das Übergangsverhalten der Fahrzeug-Querbeschleunigung und der Fahrzeug-Giergeschwindigkeit nach gebildet. Die Dämpfung der Systeme soll kritisch sein, da dies von den meisten Fahrern als das beste dynamische Verhalten beurteilt wird.

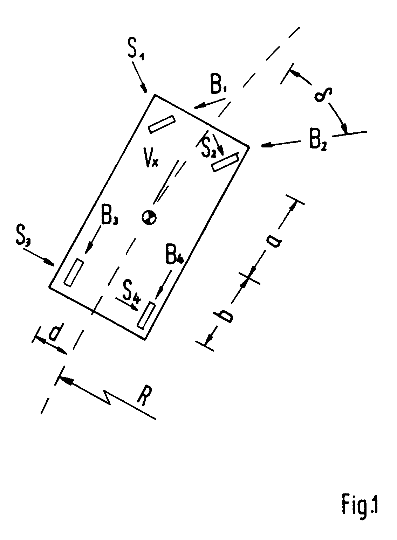

Für die folgende Beschreibung gelten die in Fig. 1 und auf Seite 9 angegebenen Bezeichnungen.

Das Modell wird wie folgt beschrieben;

$$\Delta \dddot{\varnothing} + k_1 \cdot \Delta \ddot{\varnothing} + k_2 \Delta \dot{\varnothing} = k_5 \cdot \Delta \delta$$
$$\Delta \ddddot{y} + k_3 \cdot \Delta \dddot{y} * k_4 \Delta \ddot{y} = k_6 \cdot \Delta \delta$$

$K_5$ und $k_6$ können aus der stationären Kurvenfahrt bestimmt werden (mit $\delta = \frac{1}{R}$).

Sie ergeben sich aus folgender Berechnung

$$k_2 \cdot \Delta\dot{\varnothing} = k_5 \cdot \Delta\delta, \quad \Delta\dot{\varnothing} = \frac{k_5}{k_2} \cdot \Delta\delta$$

$$\text{und } \Delta\dot{\varnothing} = \frac{V_x}{1} \cdot \Delta\delta$$

$$\left.\begin{array}{c} \\ \\ \\ \\ \end{array}\right\} \quad k_5 = k_2 \cdot \frac{V_x}{1}$$

$$k_4 \cdot \Delta\ddot{y} = k_6 \cdot \Delta\delta, \quad \Delta\ddot{y} = \frac{k_6}{k_4} \cdot \Delta\delta$$

$$\text{und } \Delta\ddot{y} = V_x \cdot \Delta\dot{\varnothing} = V_x \cdot \frac{V_x}{1} \cdot \Delta\delta = \frac{V_x{}^2}{1} \cdot \Delta\delta$$

$$\left.\begin{array}{c} \\ \\ \\ \\ \end{array}\right\} \quad k_6 = k_4 \cdot \frac{V_x{}^2}{1}$$

Wenn die Ackermann-Bedingung $\delta = 1/R$ entschärft wird, d. h.

$\delta = k_a \cdot \frac{1}{R}$, $k_a > 1$,) dann gilt:

$$\Delta\dddot{\varnothing} + k_1 \cdot \Delta\ddot{\varnothing} + k_2 \cdot \Delta\dot{\varnothing} = \frac{k_2}{k_a} \cdot \frac{V_x}{1} \cdot \Delta\delta$$

$$\Delta\ddddot{y} + k_3 \cdot \Delta\dddot{y} + k_4 \cdot \Delta\ddot{y} = \frac{k_4}{k_a} \cdot \frac{V_x{}^2}{1} \cdot \Delta\delta$$

Hiermit ist das Modell festgelegt. Das Fahrverhalten kann beeinflußt werden über die Parameter $k_1$, ...,$k_4$, $k_a$. Die Linie

$$\frac{\dot{\varnothing}}{\delta} = \frac{V_x}{k_a \cdot 1}$$

schneidet im Ackermann Diagramm die Kurven in ihrem Maximum wenn $k_a \approx 2$ ist.

Um die Änderungen von $\dot{\varphi}$ und $\ddot{y}$ zu bewirken, müssen Änderungen in den horizontalen Reifenkräften eingeleitet werden:

$\Delta B_1$ bis $\Delta B_4$, $\Delta S_1$ bis $\Delta S_4$

Es gilt:

$m \cdot \Delta\ddot{y} = (\Delta S_1 + \Delta S_2) \cdot \cos\delta + (\Delta S_3 + \Delta S_4) - (\Delta B_1 + \Delta B_2) \cdot \sin\delta$

$I \cdot \Delta\dot{\varphi} = (\Delta S_1 + \Delta S_2) \cdot a \cdot \cos\delta - (\Delta S_3 + \Delta S_4) \cdot b$
$+ (\Delta B_2 \cdot \cos\delta + \Delta B_4) \cdot d - (\Delta B_1 \cdot \cos\delta + \Delta B_3) \cdot d$
$+ (\Delta S_2 - \Delta S_1) \cdot d \cdot \sin\delta - (\Delta B_1 + \Delta B_2) \cdot a \cdot \sin\delta$

Als Variationsmöglichkeit gibt es die Radbremsschlupfwerte der vier Räder. Damit aber so wenig wie möglich Bremsverzögerung verschenkt wird, müssen die Schlupfwerte so gewählt werden, daß $\Delta B_1 + \Delta B_2 + \Delta B_3 + \Delta B_4 \approx$ maximal ist, d.h., daß die Summe der Bremskraftreduzierungen minimal ist.

Die Werte für $\Delta B_1$ ... $\Delta B_4$ können aus der Stabilitätsreserve berechnet werden, während $\Delta S_1$ ... $\Delta S_4$ aus der Quer-Stabilitätsreserve berechnet werden kann, wobei die Stabilitätsreserven über den Radbremsschlupf verändert werden können.

Zur weiteren Betrachtung werden die obigen Beziehungen wie folgt umformuliert:

$$m \cdot \Delta\ddot{y} = (\frac{\Delta S_1}{\Delta B_1} \cdot \cos\delta - \sin\delta) \cdot \Delta B_1 +$$

$$(\frac{\Delta S_2}{\Delta B_2} \cdot \cos\delta - \sin\delta) \cdot \Delta B_2 +$$

$$(\frac{\Delta S_3}{\Delta B_3} \cdot \Delta B_3 +$$

$$(\frac{\Delta S_4}{\Delta B_4} \cdot \Delta B_4$$

$$I \cdot \Delta\ddot{\phi} = \{\frac{\Delta S_1}{\Delta B_1} \cdot (a \cdot \cos\delta - d \cdot \sin\delta) - (d \cdot \cos\delta + a \cdot \sin\delta)\} \cdot \Delta B_1$$

$$+ \{\frac{\Delta S_2}{\Delta B_2} \cdot (a \cdot \cos\delta + d \cdot \sin\delta) + (d \cdot \cos\delta - a \cdot \sin\delta)\} \cdot \Delta B_2$$

$$+ \{\frac{\Delta S_3}{\Delta B_3} \cdot (-b) + (-d)\} \cdot \Delta B_3$$

$$+ \{\frac{\Delta S_4}{\Delta B_4} \cdot (-b) + (d) \} \cdot \Delta B_4$$

$$m \cdot \Delta\ddot{x} = (\cos\delta + \frac{\Delta S_1}{\Delta B_1} \cdot \sin\delta) \cdot \Delta B_1$$

$$+ (\cos\delta + \frac{\Delta S_2}{\Delta B_2} \cdot \sin\delta) \cdot \Delta B_2$$

$$+ \Delta B_3$$

$$+ \Delta B_4$$

$\Delta\ddot{y}$ kann verändert werden durch Änderungen der $\Delta B_1$ ... $\Delta B_4$. Dasselbe gilt für $\Delta\ddot{\phi}$ und $\Delta\ddot{x}$. Da es anzustreben ist, die Summe der $\Delta B_i$ so klein wie möglich zu halten, ist es richtig, nur das $B_i$ mit dem größten Koeffizienten zu ändern. Weiter gilt, daß die $\Delta B_i$ nicht gleich viel zu der Fahrzeugverzögerung beitragen. Zur Beurteilung, welcher Koeffizient in den beiden ersten obigen Beziehungen am größten ist unter Berücksichtigung der Anforderung, daß $| \Delta x |$ minimal gehalten werden soll, müssen die Koeffizienten der beiden ersten Beziehungen durch die entsprechenden Koeffizienten der dritten Beziehung geteilt werden. Dies entspricht eine Gewichtung der Koeffizienten zur Optimierung der Bremsverzögerung.

Da die Koeffizienten zeitvariabel sind und aufgrund der Reglerkorrektur sich dauernd relativ zu einander ändern, ist es ratsam alle $\Delta B_i$ zu verändern, jedoch nur soviel wie es ihren gewichteten Koeffizienten entspricht.

Durch Umformulierung folgt:

$$\Delta B_1 = c_1 \frac{\frac{\Delta S_1}{\Delta B_1} \cdot \cos\delta - \sin\delta}{\cos\delta + \frac{\Delta S_1}{\Delta B_1} \cdot \sin\delta} \cdot (\Delta\ddot{y} - \Delta\ddot{y}_F)$$

$$+ c_2 \frac{\frac{\Delta S_1}{\Delta B_1} \cdot (a \cdot \cos\delta - d \cdot \sin\delta) - (d \cdot \cos\delta + a \cdot \sin\delta)}{\cos\delta + \frac{\Delta S_1}{\Delta B_1} \cdot \sin\delta} \cdot (\Delta\dot{\varnothing} - \Delta\dot{\varnothing}_F)$$

$$\Delta B_2 = c_1 \frac{\frac{\Delta S_2}{\Delta B_2} \cdot \cos\delta - \sin\delta}{\cos\delta + \frac{\Delta S_2}{\Delta B_2} \cdot \sin\delta} (\Delta\ddot{y} - \Delta\ddot{y}_F)$$

$$+ c_2 \frac{\frac{\Delta S_2}{\Delta B_2} \cdot (a \cdot \cos\delta + d \cdot \sin\delta) + (d \cdot \cos\delta - a \cdot \sin\delta)}{\cos\delta + \frac{\Delta S_2}{\Delta B_2} \cdot \sin\delta} \cdot (\Delta\dot{\varnothing} - \Delta\dot{\varnothing}_F)$$

$$\Delta B_3 = c_1 \cdot \frac{\Delta S_3}{\Delta B_3} \cdot (\Delta\ddot{y}_M - \Delta\ddot{y}_F)$$

$$+ c_2 \cdot \left\{ \frac{\Delta S_3}{\Delta B_3} \cdot (-b) + (-d) \right\} \cdot (\Delta\dot{\varnothing} - \Delta\dot{\varnothing}_F)$$

$$\Delta B_4 = c_1 \cdot \frac{\Delta S_4}{\Delta B_4} \cdot (\Delta\ddot{y}_M - \Delta\ddot{y}_F)$$

$$+ c_2 \cdot \left\{ \frac{\Delta S_4}{\Delta B_4} \cdot (-b) + d \right\} \cdot (\Delta\dot{\varnothing} - \Delta\dot{\varnothing}_F)$$

wobei $\Delta\ddot{y}$ und $\Delta\ddot{y}_F$ die Änderung der Querbeschleunigung des Modells bzw. des Fahrzeugs sind, und $\Delta\dot{\phi}$ und $\Delta\dot{\phi}_F$ die Änderung der Giergeschwindigkeit des Modells bzw. des Fahrzeugs sind.

Da die Schlupfkurve im allgemeinen nicht monoton steigt, ist der Zusammenhang zwischen $\Delta S_i$ und $\Delta B_i$ nicht eindeutig. Deshalb ist es besser, die Änderungen in $B_i$ und $S_i$ in Abhängigkeit von den Regelvariablen $\lambda_i$ zu betrachten.

Allgemein gilt

$$\Delta B_i = \frac{\delta B_i}{\delta \lambda_i} \cdot \Delta \lambda_i + \frac{\delta B_i}{\delta_Y} \cdot \Delta \dot{Y} + \frac{\delta B_i}{\delta \emptyset} \cdot \Delta \dot{\emptyset} + \frac{\delta B_i}{\delta_X} \cdot \Delta \dot{X},$$

$$\Delta S_i = \frac{\delta S_i}{\delta \lambda_i} \cdot \Delta \lambda_i + \frac{\delta S_i}{\delta_Y} \cdot \Delta \dot{Y} + \frac{\delta S_i}{\delta \emptyset} \cdot \Delta \dot{\emptyset} + \frac{\delta S_i}{\delta_X} \cdot \Delta \dot{X}.$$

wobei weitere Änderungen verursacht durch Fahrzeugaufbaubewegung und Achsbewegung nicht berücksichtigt werden.

Da die Änderung im Schlupf, $\Delta \lambda_i$, eine höhere Bandbreite hat als die anderen Änderungen $\Delta \dot{Y}$, $\Delta \dot{\phi}$, und $\Delta \dot{X}$, werden diesen Änderungen vernachlässigt. Später können diese Dynamik-Anteile diese Hinzunahme von D- und I-Anteile im Regler, berücksichtigt werden.

Es bleibt somit:

$$\Delta B_i = \frac{\delta B_i}{\delta \lambda_i} \cdot \Delta \lambda_i$$

$$\Delta S_i = \frac{\delta S_i}{\delta \lambda_i} \cdot \Delta \lambda_i \qquad i = 1 \ldots 4$$

Hiermit können dann Gleichungen für die Änderungen der Sollschlüpfe an den Rädern aufgestellt werden, so z. B.:

$$\Delta \lambda_1 = c_1 \frac{\dfrac{\delta S_1 / \delta \lambda_1}{\delta B_1 / \delta \lambda_1} \cdot \cos \delta - \sin \delta}{\cos \delta + \dfrac{\delta S_1 / \delta \lambda_1}{\delta B_1 / \delta \lambda_1} \sin \delta} (\Delta \ddot{Y} - \Delta \ddot{Y}_F)$$

$$+ c_2 \frac{\dfrac{\delta S_1 / \delta \lambda_1}{\delta B_1 / \delta \lambda_1} \cdot (a \cdot \cos \delta - d \cdot \sin \delta) - (d \cdot \cos \delta + a \cdot \sin \delta)}{\cos \delta + \dfrac{\delta S_1 / \delta \lambda_1}{\delta B_1 / \delta \lambda_1} \cdot \sin \delta} \cdot (\Delta \dot{\emptyset} - \Delta \dot{\emptyset}_F)$$

Die Werte

$$\frac{\delta S_i}{\delta \lambda_i} \text{ und } \frac{\delta B_i}{\delta \lambda_i}$$

erhält man aus abgelegten Reifenkennfelder, oder aus Modellen die die Reifenkennfelder nachbilden, oder direkt aus Messungen indem der Schlupf um $\Delta \lambda_i$ geändert, die Kraftänderungen $\Delta S_i$ und $\Delta B_i$ gemessen, und

$$\frac{\delta S_i}{\delta \lambda_i} \approx \frac{\Delta S_i}{\Delta \lambda_i} \quad \text{und} \quad \frac{\delta B_i}{\delta \lambda_i} \approx \frac{\Delta B_i}{\Delta \lambda_i}$$

gesetzt werden.

In Abgekürzter Schreibweise erhält man schließlich:

$$\Delta \lambda_1 = C_1 \cdot P_{y1} \cdot (\Delta \ddot{y} - \Delta \ddot{y}_F) + C_2 \cdot P_{\phi 1} \cdot (\Delta \dot{\phi} - \Delta \dot{\phi}_F)$$
$$\Delta \lambda_2 = C_1 \cdot P_{y2} \cdot (\Delta \ddot{y} - \Delta \ddot{y}_F) + C_2 \cdot P_{\phi 2} \cdot (\Delta \dot{\phi} - \Delta \dot{\phi}_F)$$
$$\Delta \lambda_3 = C_1 \cdot P_{y3} \cdot (\Delta \ddot{y} - \Delta \ddot{y}_F) + C_2 \cdot P_{\phi 3} \cdot (\Delta \dot{\phi} - \Delta \dot{\phi}_F)$$
$$\Delta \lambda_4 = C_1 \cdot P_{y4} \cdot (\Delta \ddot{y} - \Delta \ddot{y}_F) + C_2 \cdot P_{\phi 4} \cdot (\Delta \dot{\phi} - \Delta \dot{\phi}_F)$$

Durch Wahl der Werte der Koeffizienten $C_1$ und $C_2$ kann festgelegt werden, was wichtiger ist: das Ausregeln der Abweichung der Quer-Beschleunigung $(\Delta \ddot{y} - \Delta \ddot{y}_F)$ oder das Ausregeln der Abweichung der Giergeschwindigkeit $(\Delta \dot{\phi} - \Delta \dot{\phi}_F)$.

Zur Kompensation der Vernachlässigung der Dynamikanteile $\Delta \dot{Y}$ und $\Delta \dot{\phi}$ wird nun Folgendes vorgeschlagen.

Statt der Verarbeitung der Abweichungen allein, kann auch die Verarbeitung der Differentiale und Integrale der Abweichungen hinzugenommen werden. Es entsteht dann ein PD- oder ein PI- oder ein PID-Regler; z. B. lautet die Beziehung bei einer PID-Regelung für $\Delta \lambda_1$:

$$\Delta \lambda_1 = C_1 \cdot P_{y1} \cdot \left\{ K_1{}' \, (\Delta y - \Delta y_F) + K_2{}' \, (\ddot{\Delta y} - \ddot{\Delta y_F}) \right.$$
$$\left. + K_3{}' \int_0^t (\ddot{\Delta y} - \ddot{\Delta y_F}) \, dt \right\}$$
$$+ C_2 \cdot P_{\emptyset 1} \cdot \left\{ K_4{}' \, (\dot{\Delta \emptyset} - \dot{\Delta \emptyset_F}) + K_5{}' \, (\dot{\Delta \emptyset} - \dot{\Delta \emptyset_F}) \right.$$
$$\left. + K_6{}' \int_0^t (\dot{\Delta \emptyset} - \dot{\Delta \emptyset_F}) \, dt \right\}$$

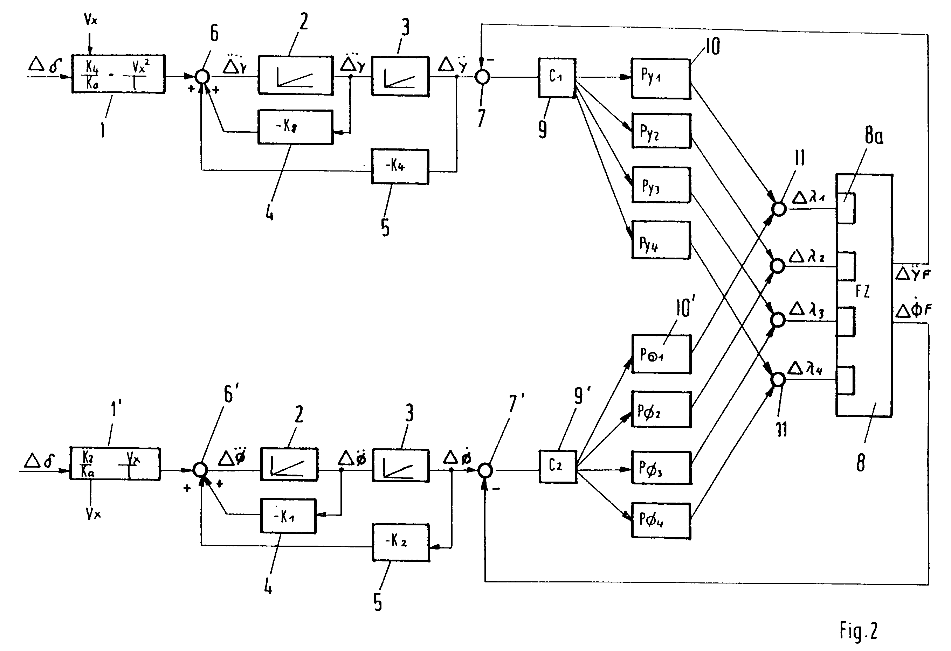

Anhand der Fig. 2 der Zeichnung wird ein Ausführungsbeispiel der Erfindung erläutert.

In die Blöcke 1 bzw. 1' werden die von Zeit zu Zeit kurzzeitig vorgenommenen Änderungen des Lenkwinkels $\Delta \delta$ und die Fahrzeuglängsgeschwindigkeit $V_x$ eingegeben und es wird dort $\Delta \delta$ mit $K_2 \, V_x / K_a l$ bzw. $K_4 \cdot V_x^2 / Ka \cdot l$ multipliziert. Mittels Integratoren 2 und 3 bzw. 2' und 3', Multplikatoren 4 und 5 bzw. 4' und 5' und Addierer 6 bzw. 6' erhält man am Ausgang der Integratoren 3 und 3' die Grössen $\Delta \ddot{y}$ bzw. $\Delta \dot{\phi}$ des Modells.

In Vergleichern 7 bzw. 7' werden die Modellgrößen $\Delta \ddot{y}$ und $\Delta \dot{\phi}$ mit den am Fahrzeug gemessenen entsprechenden Größen $\Delta \ddot{y}_F$ und $\Delta \dot{\phi}_F$ verglichen. Die Abweichungen $(\Delta \ddot{y} - \Delta \ddot{y}_F)$ bzw. $(\Delta \dot{\phi} - \Delta \dot{\phi}_F)$ werden in Multiplizierern 9 bzw. 9' mit Gewichtungsfaktoren $c_1$ bzw. $c_2$ versehen. Danach wird in je vier Kanälen aufgetrennt und die gewichteten Abweichungen werden mit den einzelnen Rädern zugeordneten Faktoren $P_{yi}$ bzw. $P_{\phi i}$ in Multiplizierern 10 bzw. 10' multipliziert. Sich hinsichtlich der Radzugehörigkeit entsprechende Signale werden dann in Addierern 11 addiert und man erhält die Solländerungen der Schlüpfe $\Delta \lambda i$ der einzelnen Räder. Diese werden im Fahrzeugblock 8 enthaltenen Reglern 8a zugeleitet, die den Bremsdruck so verändern, daß der gerade herrschende Bremsschlupf $\lambda i$ in einen neuen Bremsschlupf $\lambda i + \Delta \lambda i$ überführt wird. Hierzu muß der Bremsschlupf in bekannter Weise ermittelt und mit dem neuen Sollbremsschlupf $\lambda i + \Delta \lambda i$ verglichen werden. Die Bremsdruckvariation wird beendet, wenn der Bremsschlupf gleich dem Sollbremsschlupf geworden ist. Sollen anstelle der $\Delta \lambda i$ den Sollbremskraftänderungen $\Delta Bi$ entsprechende Signale erzeugt werden und durch die Regler entsprechende Bremskraftänderungen vorgenommen werden, so sind in Fig. 2 lediglich in den Multiplizieren 10 bzw. 10' andere Faktoren $P'_{yi}$ bzw. $P'_{\phi i}$ vorzugeben.

Zeichenerklärung

| | |
|---|---|
| B | Bremskraft |
| S | Seitenführungskraft |
| $\dot\phi$ | Giergeschwindigkeit |
| ÿ | Querbeschleunigung |
| $k_1 ... k_6$ | Konstanten des Modells |
| l | Abstand zwischen Vorder- und Hinterachse ( = a + b) |
| $\delta$ | Lenkwinkel der Vorderräder |
| $V_x$ | Fahrzeug-Längsgeschwindigkeit |
| R | Kurvenradius |
| m | Fahrzeugmasse |
| I | Fahrzeugdrehträgheit um die Hochachse |
| a | Abstand Vorderachse zu Fahrzeugschwerpunkt |
| b | Abstand Hinterachse zu Fahrzeugschwerpunkt |
| d | Halber Abstand zwischen Räder einer Achse |
| $C_a$, $C_2$ | Konstanten zur Gewichtung der Regelabweichungen |
| $k_1 ... K_6'$ | Konstanten zur Gewichtung der P-, D- und I-Anteile des PID Reglers |
| $k_a$ | Konstante |

**Patentansprüche**

1. Verfahren zur Regelung der Fahrdynamik eines Fahrzeugs beim Bremsen durch Beeinflussung des Bremsschlupfs, <u>dadurch gekennzeichnet</u>, daß eine kleine Änderung des Lenkwinkel $\Delta\delta$ vorgenommen wird, daß anhand einer Modellrechnung, die auf den Modellgleichungen

$$\Delta\dddot\phi + k_1 \ \Delta\ddot\phi + k_2 \ \Delta\dot\phi = k_5 \ \cdot \ \Delta\delta$$

$$\Delta\dddot{y} + k_3 \ \Delta\ddot{y} + k_4 \ \Delta\ddot{y} = k_6 \ \cdot \ \Delta\delta$$

beruht, die daraus resultierenden Änderungen der Giergeschwindigkeit $\Delta\dot\phi$ und der Querbeschleunigung $\Delta\ddot{y}$ berechnet werden, wobei $k_1$ bis $k_4$ Konstante und $k_5$ und $k_6$ von der Fahrzeuggeschwindigkeit abhängige Größen sind, daß diese Änderungen mit den am Fahrzeug gemessenen tatsächlichen Änderungen der Giergeschwindigkeit $\Delta\dot\phi_F$ und der Querbeschleunigung $\Delta\ddot{y}_F$ verglichen werden und daß aus den Abweichungen der verglichenen Größen $\Delta\dot\phi - \Delta\dot\phi_F$ bzw. $\Delta\ddot{y} - \Delta\ddot{y}_F$ und vom Lenkwinkel $\delta$, der Seitenführungskraft $S_i$ und der Bremskraft $B_i$ abhängigen Größen $P_{\phi i}$ bzw. $P_{y i}$ Solländerungen $\Delta\lambda i$ der Radschlupfwerte an den einzelnen Rädern (i = 1 - n) nach Maßgabe der Beziehung

$$\Delta\lambda i = c_1 P_{y i} (\Delta\ddot{y} - \Delta\ddot{y}_F) + c_2 P_{\phi i} (\Delta\dot\phi - \Delta\dot\phi_F)$$

ermittelt werden, die zur Änderung der Radbremsdrücke im Sinne dieser Sollradschlupfänderungen $\Delta\lambda i$ verwendet werden, wobei $c_1$ und $c_2$ Gewichtungsfaktoren sind.

2. Verfahren zur Regelung der Fahrdynamik eines Fahrzeugs beim Bremsen durch Beeinflussung des Bremsschlupfs, dadurch gekennzeichnet, daß eine kleine Änderung des Lenkwinkel $\Delta\delta$ vorgenommen wird, daß anhand einer Modellrechnung, die auf den Modellgleichungen

$$\Delta\dddot\phi + k_1 \ \Delta\ddot\phi + k_2 \ \Delta\dot\phi = k_5 \ \cdot \ \Delta\delta$$

$$\Delta\dddot{y} + k_3 \ \Delta\dddot{y} + k_4 \ \Delta\ddot{y} = k_6 \ \cdot \ \Delta\delta$$

beruht, die daraus resultierenden Änderungen der Giergeschwindigkeit $\Delta\dot{\phi}$ und der Querbeschleunigung $\Delta\ddot{y}$ berechnet werden, wobei $k_1$ bis $k_4$ Konstante und $k_5$ und $k_6$ von der Fahrzeuggeschwindigkeit abhängige Größen sind, daß diese Änderungen mit den am Fahrzeug gemessenen tatsächlichen Änderungen der Giergeschwindigkeit $\Delta\dot{\phi}_F$ und der Querbeschleunigung $\Delta\ddot{y}_F$ verglichen werden und daß aus den Abweichungen der verglichenen Größen $\Delta\dot{\phi} - \Delta\dot{\phi}_F$ bzw. $\Delta\ddot{y} - \Delta\ddot{y}_F$ und vom Lenkwinkel $\delta$, der Seitenführungskraft $S_i$ und der Bremskraft $B_i$ abhängigen Größen $P_{\phi i}'$ bzw. $P_{yi}'$ Solländerungen $\Delta B_i$ der Bremskräfte an den einzelnen Rädern (i = 1 - n) nach Maßgabe der Beziehung $\Delta B_i = c_1 P_{yi}'(\Delta\ddot{y} - \Delta\ddot{y}_F)$ + $c_2 P_{\phi i'} (\Delta\dot{\phi} - \Delta\dot{\phi}_F)$ ermittelt werden, die zur Änderung der Radbremsdrücke im Sinne dieser Sollradbremskraftänderungen $\Delta B_i$ verwendet werden, wobei $c_1$ und $c_2$ Gewichtungsfaktoren sind.

3. Verfahren nach Anspruch 1 oder 2, dadurch gekennzeichnet, daß die Solländerungen $\Delta\lambda i$ bzw. $\Delta B i$ neben dem proportionalen Anteil noch differentiale (PD) und/oder integrale Anteile (PI, PID) aufweisen.

## Claims

1. Method for controlling the driving dynamics of a vehicle during braking by influencing the brake slip, characterised in that a small change in the steering angle $\Delta\delta$ is performed, in that, by means of a model calculation based on the model equations

$$\Delta\dddot{\phi} + k_1 \, \Delta\ddot{\phi} + k_2 \, \Delta\dot{\phi} = k_5 \cdot \Delta\delta$$

$$\Delta\dddot{y} + k_3 \, \Delta\ddot{y} + k_4 \, \Delta\ddot{y} = k_6 \cdot \Delta\delta$$

the resulting changes in the yaw rate $\Delta\dot{\phi}$ and the transverse acceleration $\Delta\ddot{y}$ are calculated, $k_1$ to $k_4$ being constants and $k_5$ and $k_6$ being quantities dependent on the vehicle speed, in that these changes are compared to the actual changes in the yaw rate $\Delta\dot{\phi}_F$ and the transverse acceleration $\Delta\ddot{y}_F$ measured on the vehicle and in that, from the deviations of the compared quantities $\Delta\dot{\phi} - \Delta\dot{\phi}_F$ and $\Delta\ddot{y} - \Delta\ddot{y}_F$ respectively and from quantities $P_{\phi i}$ and $P_{yi}$ dependent on the steering angle $\delta$, the cornering force $S_i$ and braking force $B_i$, desired changes $\Delta\lambda i$ in the wheel slip values at the individual wheels (i = 1 - n) are determined in accordance with the relation

$$\Delta\lambda i = c_1 P_{yi} (\Delta\ddot{y} - \Delta\ddot{y}_F) + c_2 P_{\phi i} (\Delta\dot{\phi} - \Delta\dot{\phi}_F)$$

these desired changes being used to change the wheel brake pressures to give these desired wheel slip changes $\Delta\lambda i$, $c_1$ and $c_2$ being weighting factors.

2. Method for controlling the driving dynamics of a vehicle during braking by influencing the brake slip, characterised in that a small change in the steering angle $\Delta\delta$ is performed, in that, by means of a model calculation based on the model equations

$$\Delta\dddot{\phi} + k_1 \, \Delta\ddot{\phi} + k_2 \, \Delta\dot{\phi} = k_5 \cdot \Delta\delta$$

$$\Delta\dddot{y} + k_3 \, \Delta\ddot{y} + k_4 \, \Delta\ddot{y} = k_6 \cdot \Delta\delta$$

the resulting changes in the yaw rate $\Delta\dot{\phi}$ and the transverse acceleration $\Delta\ddot{y}$ are calculated, $k_1$ to $k_4$ being constants and $k_5$ and $k_6$ being quantities dependent on the vehicle speed, in that these changes are compared to the actual changes in the yaw rate $\Delta\dot{\phi}_F$ and the transverse acceleration $\Delta\ddot{y}_F$ measured on the vehicle and in that, from the deviations of the compared quantities $\Delta\dot{\phi} - \Delta\dot{\phi}_F$ and $\Delta\ddot{y} - \Delta\ddot{y}_F$ respectively and from quantities $P_{\phi i}$ and $P_{yi}$ dependent on the steering angle $\delta$, the cornering force $S_i$ and braking force $B_i$, desired changes $\Delta B_i$ in the braking forces at the individual wheels (i = 1 - n) are determined in accordance with the relation

$$\Delta B_i = c_1 P_{yi}'(\Delta \ddot{y} - \Delta \ddot{y}_F) + c_2 P_{\phi i'} (\Delta \dot{\phi} - \Delta \dot{\phi}_F)$$

these desired changes $\Delta B$; being used to change the wheel brake pressures to give these desired wheel braking force changes, $c_1$ and $c_2$ being weighting factors.

3. Method according to Claim 1 or 2, characterised in that, in addition to the proportional component, the desired changes $\Delta \lambda i$ and $\Delta B i$ have differential (PD) and/or integral components (PI, PID).

## Revendications

1. Procédé de régulation du comportement dynamique d'un véhicule lors du freinage en influençant le glissement de freinage, procédé caractérisé en ce que l'on effectue une petite variation de l'angle de braquage $\Delta \delta$, en ce qu'à partir d'un calcul sur modèle, qui repose sur les équations de modèle suivantes :

$$\dddot{\Delta\phi} + k_1 \ddot{\Delta\phi} + k_2 \dot{\Delta\phi} = k_5 \cdot \Delta\delta$$

$$\ddddot{\Delta y} + k_3 \dddot{\Delta y} + k_4 \ddot{\Delta y} = k_6 \cdot \Delta\delta$$

on calcule les variations qui en résultent de la vitesse de braquage $\Delta\phi$ et de l'accélération transversale $\Delta y$, $k_1$ à $k_4$ étant des constantes de $k_5$ et $k_6$ étant des grandeurs fonction de la vitesse du véhicule, en ce que l'on compare ces variations avec les variations effectives mesurées sur le véhicule de la vitesse de braquage $\Delta\phi_F$ et de l'accélération transversale $\Delta y_F$ et en ce qu'à partir des variations des grandeurs comparées /$\Delta\phi$° - $\Delta\phi$°$_F$/ ou /$\Delta y$ - $\Delta y_F$/ et de l'angle de braquage $\delta$, de la force de guidage latéral $S_i$ et des grandeurs $P_{\phi i}$ ou $P_{yi}$ fonction de la force de freinage $B_i$ et de la force de guidage latéral $S_i$ ou $P_y$, on détermine des variations de consigne $\Delta\lambda i$ des valeurs de glissement sur les différentes roues (i = 1 - n) selon l'équation suivante :

$$\Delta\lambda i = c_1 P_{yi} (\Delta \ddot{y} - \Delta \ddot{y}_F) + c_2 P\dot{\phi}_i (\Delta \dot{\phi}_F)$$

variations qui sont utilisées pour faire varier la pression de freinage des roues dans le sens des variations de glissement de roue de consigne, $C_1$ et $C_2$ étant des coefficients de pondération.

2. Procédé pour le réglage du comportement dynamique d'un véhicule lors du freinage exécuté en influençant le glissement de freinage, procédé caractérisé en ce que l'on effectue une petite variation de l'angle de braquage $\Delta \delta$, en ce qu'à partir d'un calcul sur modèle qui repose, sur l'équation suivante :

$$\dddot{\Delta\phi} + k_1 \ddot{\Delta\phi} + k_2 \dot{\Delta\phi} = k_5 \cdot \Delta\delta$$

$$\ddddot{\Delta y} + k_3 \dddot{\Delta y} + k_4 \ddot{\Delta y} = k_6 \cdot \Delta\delta$$

on calcule les variations qui en résultent de la vitesse de braquage $\Delta\phi$ et de l'accélération transversale $\delta\ddot{y}$, $k_1$ à $k_4$ étant des constantes et $k_5$ et $k_6$ étant des grandeurs fonction de la vitesse du véhicule, en ce que l'on compare ces variations aux variations effectives, mesurées sur le véhicule, de la vitesse de braquage $\Delta\dot{\phi}_F$ et de l'accélération transversale $\Delta\ddot{y}_F$ et en ce qu'à partir des écarts des grandeurs comparées /$\Delta\phi$° - $\Delta$°$_F$/ ou /$\Delta\ddot{y}$ - $\Delta\ddot{y}_F$/ et de l'angle de braquage $\delta$, des grandeurs $P_{\phi i}'$ ou $P_{yi}'$ fonction de la force de guidage latéral $S_i$ et de la force de freinage $B_i$ on détermine les variations de consigne $\Delta B_i$ des forces de freinage sur les différentes roues (i = 1 - n) selon la relation :

$$\Delta B_i = c_1 P_{yi}' (\Delta \ddot{y} - \Delta \ddot{y}_F) + c_2 P_{\phi i}' (\Delta \phi^\circ - \Delta \phi^\circ{}_F)$$

grandeurs qui sont utilisées pour modifier la pression de freinage sur les roues dans le sens de ces variations de force de consigne de freinage des roues, $C_1$ et $C_2$ étant des coefficients de pondération.

3. Procédé selon la revendication 1 ou 2, caractérisé en ce que les variations de consigne $\Delta \lambda_i$ ou $\Delta B_i$ présentent en plus de la fraction proportionnelle encore des fractions différentielles (PD) et/ou intégrales (PI, PID).

Fig.1

Fig.2